Europäisches Patentamt

European Patent Office

Office européen des brevets

(19)

(11) **EP 0 848 555 A1**

(12) **EUROPEAN PATENT APPLICATION**

(43) Date of publication:
17.06.1998 Bulletin 1998/25

(51) Int. Cl.$^6$: **H04N 7/26**

(21) Application number: 96203518.4

(22) Date of filing: 13.12.1996

(84) Designated Contracting States:
AT BE CH DE DK ES FI FR GB GR IE IT LI LU MC NL PT SE
Designated Extension States:
AL LT LV RO SI

(71) Applicant: **Farhana Ltd.**
**Tortola (VG)**

(72) Inventors:
• **Van den Heuvel, Willy**
**5450 AC Mill (NL)**

• **Veirman, Roger**
**9700 Oudenaarde (BE)**

(74) Representative:
**Quintelier, Claude**
**GEVERS Patents,**
**Brussels Airport Business Park,**
**Holidaystraat 5**
**1831 Diegem (BE)**

(54) **A method and a device for compressing and decompressing video pictures**

(57)    A method and a device for compressing and decompressing video pictures, wherein each video picture is analysed by comparing successive video pixel lines with each other. If it is established upon comparison that successive pixel lines have a substantially same pixel content only one of those lines is considered for compression purpose. An identifier word is added to indicate how many successive lines have a substantially same pixel content.

Fig.1

EP 0 848 555 A1

## Description

The invention relates to a method for compressing each time a video picture which belongs to a first series of video pictures, each of said video pictures being build up by a predetermined number of N pixel lines, said method comprising:

- supplying linewise said picture to a first memory;
- generating on the basis of a first series of address words a second series of a memory addresses for addressing locations within said first memory;
- successively addressing into said first memory the addresses of said first series;
- writing at said addresses at least a part of the supplied pixel line;
- retrieving said pixel line parts from said first memory and supplying them to a video compression unit;
- applying a predetermined compression operation to said retrieved pixel line parts and thereby forming compressed video data;
- storing said compressed video data into a second memory.

Such a method is known under the denomination JPEG or MPEG compression / decompression. According to the JPEG method, each video picture is compressed as a whole, whereas according to the MPEG method the content of two successive pictures is compared and only the difference between the pictures is compressed. As a series of video pictures are concerned the pictures are first each time stored in a first memory which is addressed in such a manner as to line-wise store the pixel lines. Once the different lines of a same picture are stored the compression operation can start in order to form compressed video data which is then stored in a second memory. The stored pixel lines have of course been converted from analogue to digital before the storage and compression has taken place, unless digital video was supplied by the source. The compression of the video pictures is required because due to the nature of video picture a substantive amount of video information is involved. Storing all the information of all the pictures belonging to the series of video pictures would require a tremendous storage capacity.

A drawback of the known method and device is that the processing speed at which the video pictures are compressed is relatively low and does not allow a real time compression of the supplied video pictures. The known method enables to compress 25 pictures per second with a compression ratio of 25 at the most. Not only does this unable to operate at the actual 50 Hz repetition frequency of known video but it strongly reduces the throughput of whole further processing of the video information.

It is an object of the present invention to realise a method for compressing video pictures enabling to compress at a higher processing speed.

A method for compressing each time a video picture according to the present invention is therefor characterised in that

- said generating of said first series of address words comprises:

(a) comparing the pixel content of said pixel line part of an $i^{th}$ (i $\varepsilon$ N) pixel line with a same pixel line part of at least one subsequent pixel line;
(b) generating a first respectively a second control signal if upon said comparing it is established that said $i^{th}$ and said at least one subsequent pixel line part have a different respectively a substantially same pixel content;
(c) verifying if a last considered pixel line amongst said subsequent pixel lines is the last of the N pixel lines to be taken into account for the considered picture and generating a third respectively a fourth control signal if said last considered pixel line is not respectively is said last line;
(d) under control of said second and third control signal:

(d₁) starting a counter at a value j=m wherein m indicates the total number of pixel lines considered during the comparison;
(d₂) selecting an $(i+j)^{th}$ pixel line;
(d₃) further comparing the pixel content of said pixel line part of the $(i+j)^{th}$ pixel line with a same part of at least one of the pixel lines belonging to the i to (i+j-1) pixel lines;

(e) generating a fifth respectively a sixth control signal if upon said further comparing it is established that the compared pixel line parts have substantially a same respectively a different pixel content;
(f) under control of said fifth control signal incrementing said counter by one unit (j=j+1) and executing again said step c for the $(i+j)^{th}$ pixel line;
(g) under control of said fifth and said third control signal executing again said steps (d₂), (d₃) and (e);
(h) under control of said sixth or said fifth followed by a fourth control signal:

(h₁) reading the value j indicated by said counter and forming an identifier word based on said value j;
(h₂) forming an $i^{th}$ address word including a flag;

(i) under control of a third followed by a sixth control signal substituting said value i by said i+j and repeating as from said step (a);

(j) under control of a first control signal forming an $i^{th}$ address word;

- said writing includes the writing of said identifier word when said $i^{th}$ address word includes said flag. The comparison between successive pixel line parts enables to verify whether the successive pixel line parts have a substantially same or different content. If it is established that both pixel line parts have substantially the same pixel content the second control is generated under control of which the comparison operation is continued in order to check how many of the successive pixel line parts have a content which is substantially the same as the one initially compared with. A single address word is then generated for all pixel line parts which have a substantially same content, so that only a single pixel line part will be stored. In order to know for a later decompression how many pixel line parts have been removed the identifier word is generated and stored in the first memory. In such a manner the total amount of data stored per video picture is considerably reduced enabling a faster processing without a loss of quality as only comparable pixel line parts has been removed and the identifier word enables to rebuild the picture.

A decompression of video data compressed by application of the method according to the present invention is characterised in that said decompression comprises the following step:

- retrieving said compressed video data for a video picture from said second memory;
- decompressing said compressed video data and forming thereby pixel line parts for said video picture;
- verifying if said decompressed pixel line parts comprise said identifier word and generating a seventh control signal if said pixel line part comprises said identifier;
- generating for each decompressed video line part a memory address;
- under control of said seventh control signal determining said value j on the basis of said identifier and generating j+1 successive memory addresses for the pixel line part to which said identifier belongs;
- storing said decompressed pixel line parts at said addresses and storing at said j+1 successive memory address the pixel line part to which said identifier belongs. The verification in order to detect the presence of the identifier word enables to retrieve the identifier word and to determine how many pixel line parts, which had a substantially same pixel content, have been skipped during the compression operation. The generation of j+1 successive memory addresses enables to copy the pixel line part and thus to rebuild the whole video picture.

A first preferred embodiment of a method for compressing a video picture according to the present invention is characterised in that, said first series of video pictures comprises successive video pictures supplied by a video picture source, and wherein said generating of said first series of address words being each time applied on a video picture preceding the one for which said second series is generated. Since on one hand the succession of video picture is rather fast and on the other hand two successive video pictures do not differ much from the point of view of their content a delay over one picture, i.e. 1/25 sec in video 50 Hz pictures, will not be perceived by a human eye. The determination of the first series of address word on a preceding picture and the generation of the address words on the subsequent pictures thus enables a faster throughput as the address words are available as soon as the video picture is stored.

A second preferred embodiment of a method for compressing a video picture according to the present invention is characterised in that for said comparison between an $i^{th}$ pixel line part and an $(i + 1)^{th}$ or an $(i + j)^{th}$ a differential value of said $i^{th}$ and $(i+1)^{th}$ or $(i+j)^{th}$ pixel line part is determined. As successive pixel lines are input it is convenient to generate successive memory addresses and disable the output thereof.

The invention also relates to a device for compressing each time a video picture. Such a device is characterised in that said address word generator is connected to a comparison member provided for comparing successive pixel line parts with each other and for assigning a single address word to those successive pixel line parts for which said comparison results into an establishment that those successive pixel line parts have substantially a same pixel content and for determining an identifier word identifying each time a number of successive pixel line parts having substantially a same pixel content, said first memory being provided for storing said identifier word.

The invention will now be described in more detail by means of an example illustrated in the drawings wherein:

Figure 1 illustrates schematically those components of the device according to the invention enabling the compression operation;
Figure 2 illustrates the device shown in figure 1 in more detail;
Figure 3 illustrates schematically those components of the device enabling the decompression operation;
Figure 4 illustrates by means of a flow chart, the method for compressing according to the present invention.

Figure 5 illustrates a blockwise division of a video picture;

Figure 6 illustrates the content of a single block within a video picture;

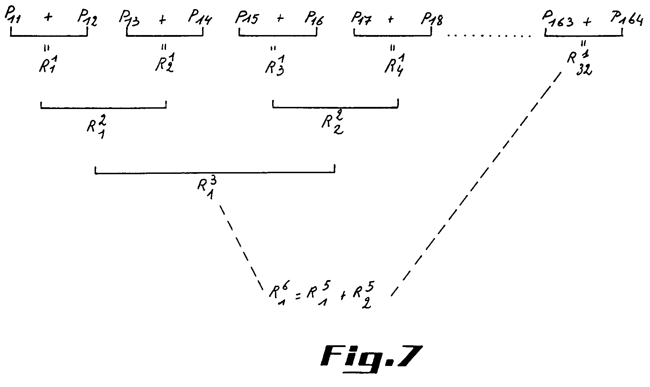

Figure 7 illustrates the calculation of a horizontal line value $R^6$; and

Figure 8 illustrates the content of a table memory as part of a device according to the present invention.

In the drawings a same reference number has been assigned to a same or analogous element.

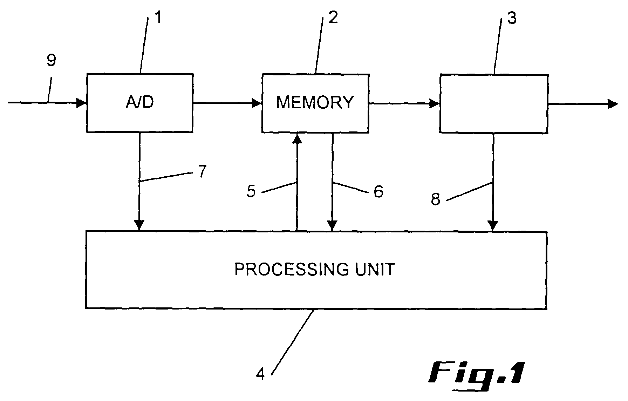

Figure 1 shows schematically the compression part of the device according to the invention. The video pictures to be compressed are supplied via a line 9 to an analogue to digital (A/D) converter 1. Of course digital video information could be supplied directly to the device, in which case the element 1 would not be necessary. The video pictures are for example supplied by a video camera or another video source. The successive video pictures form a first series of video pictures and each of said video pictures being built up by a predetermined number of N pixel lines.

An output of the A/D converter 1 is connected on one hand to a data input of a first memory, for example formed by a FIFO and on the other hand to a data input of a processing unit 4. An address output of the processing unit is connected via an address line 5 to an address input of the first memory 2. A data output of the first memory 2 is connected to a compression member 3 at which output 10 compressed video data is supplied. A control input of said compression member is connected to a control output of the processing unit 4 via a line 8. An overflow control line 6 connects an output of said first memory with said processing unit 4.

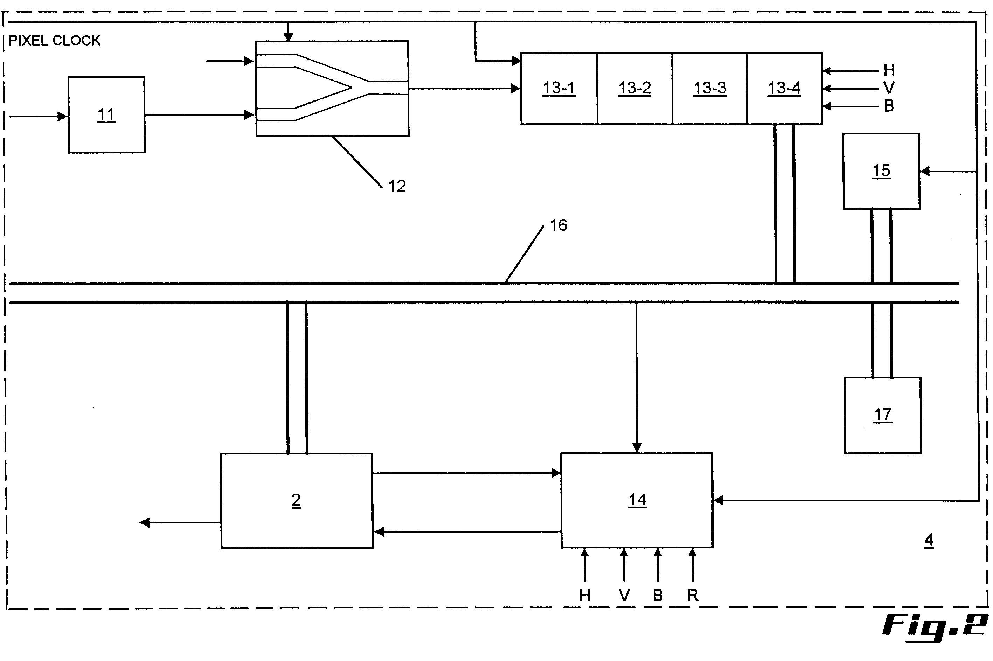

A more detailed view of a preferred embodiment of the processing unit 4 is shown in figure 2. The processing unit comprises a data bus 16 to which a data register 11 is connected. The data register has an output connected to an accumulator 12 which also receives the digitalized pixel data such as output by the A/D converter 1. The accumulator is provided for adding data bits output by the register 11 to the pixel data in order to enhance the pixel quality of the pixel data. This is of interest if for example the supplied video information is insufficient. An output of the accumulator 12 is connected to an input of a comparison member 13 which receives the horizontal (H), the vertical (V) signal pulses of the video signal as well as the blanking period (B) and the pixel clock signal. The comparison member comprises a serial connection of a serial sampler 13-1, a result divider 13-2, a sample counter 13-3 and a result register 13-4.

The processing unit further comprises an address word generator 14 which is also connected to the bus 16 and receives the horizontal and vertical synchronisation signal, the blanking periods the odd/even frame. The FIFO memory 2 is connected to an output of the address word generator. A microprocessor 15 and a processing memory 17 are also connected to the data bus 16. The microprocessor is provided for controlling the operation of the device by generating control instructions and processing of data.

The compression operation will now be described in more detail. The video pictures are supplied linewise and picture by picture to the A/D converter 1 where they are transformed into for example series of 24 bit RGB words. The microprocessor 15 generates a second series of address words in order to address locations into the first memory 2 and to enable the storage of the video pixel data. Preferably the address words are formed by successive address words enabling an addressing of successive memory location which simplifies the addressing. After storage of the pixel lines of a complete video image, the content of the first memory is transferred to the compression member 3 in order to start preferably a JPEG compression operation. However an MPEG compression operation would also be possible.

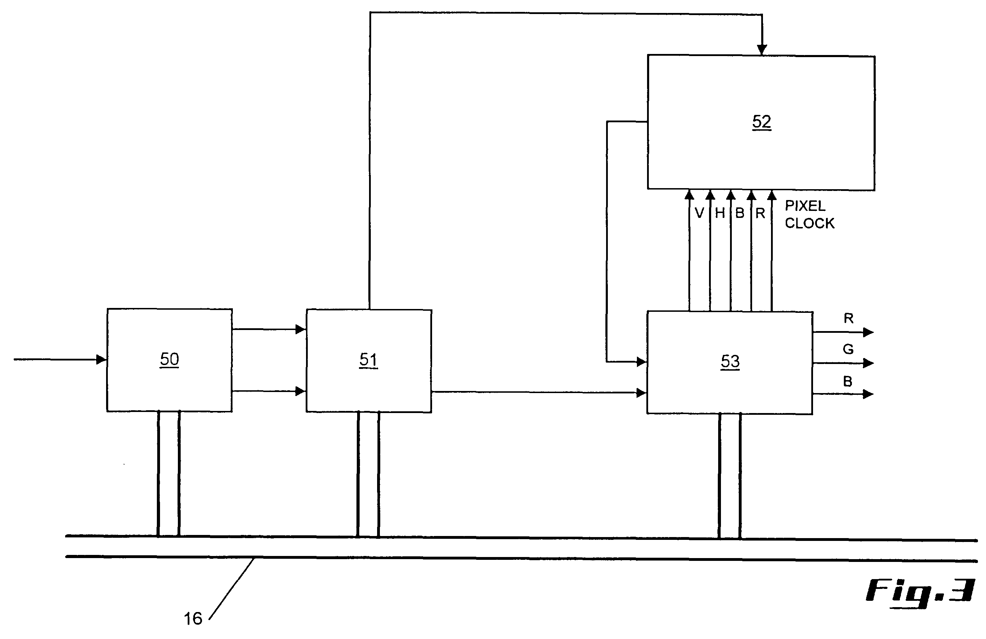

Figure 4 illustrates by means of a flow chart the operation of the processing unit 4 upon compressing the video picture. This operation which is executed under control of the microprocessor 15 comprises the following steps:

20 STR: The operation is started each time a new video picture belonging to the first series of video pictures is supplied from the video source. This operation is for example started under control of a supplied blanking period signal (B) at the input of the comparison member 13.

21 i=1: A first counter, counting the number of N pixel lines of the video picture is started. For the sake of clarity of the present description it will be assumed that a whole pixel line is considered. However the present method could also be applied for a pixel line part, for example 1/8 or ½ of the pixel line whereas instead of comparing each time whole pixel lines with each other, the pixel line would then each time partially be compared with each other. Preferably each line is divided into a series of bytes and a bytewise comparison is applied. That a first line (i=1) of the video picture is first considered is also a choice to which the present invention is not limited. The method could as well be applied by starting with another pixel line than the first one. Some pixel lines, for example the first four lines and the last four lines, could systematically be skipped. This could however lead to a loss of quality of the considered video picture. It could also be possible to systematically delete predetermined lines such as for example each fourth or each sixth line.

23 Rdi, i+1: The considered pixel line i, and at least a subsequent one (i +1) are read from the accumulator. For the sake of clarity it will be considered that an $i^{th}$ and $(i+1)^{th}$ line are read for later comparison.

However more than two pixel lines or pixel line parts could be read depending on how many pixel lines will be compared.

24 I(i)=I(i+1)? The pixel content of pixel line i is compared with the one of pixel line (i +1). When only pixel line parts are considered, the pixel content of a same line part have to be compared and the comparison has preferably to be executed for each pixel line part of the considered pixel lines. The comparison is for example realised by applying a minimum/maximum differential operation for line (i) and line (i +1) and by comparing the obtained differential values as will be described in more detail hereafter. The latter operation being performed by the result divider 13-2 and the counter 13-3. If more than two lines are read at step 23, the comparison operation is of course applied on all the lines read.

25 GN1: If as a result form the comparison operation performed under step 24 it appears that line (i) and line (i+1) have a different pixel content, a first control signal is generated.

26 GN2: When said comparison results into a substantially same pixel content for pixel line (i) and (i+1) a second control signal is generated.

27 j=2: A second counter is initialised to a value j=2 under control of said second control signal. If more than two pixel lines or pixel line parts are considered during the comparison operation, the second counter is initialised to a value j=m, wherein m indicates the total number of pixel lines or pixel line parts considered during the comparison operation.

28 i+1=N / i+j=N? At this stage it is verified whether the last considered pixel line is the last of the N pixel lines which form the video picture. The considered pixel line is here line i+1 or line i+j if a fifth control signal was generated by the description given hereunder.

29 GN4 resp. 30 GN3: A fourth respectively a third control signal is generated when the considered pixel pixel line is respectively is not the last line.

31 RD (i+j): Under control of the second and the third control signal the pixel line (i+j) is selected and read.

32 I(i+j)=I(i)? The pixel content if pixel line (i+j) is compared with the one of at least one of the pixel lines belonging to the i to (i+j-1) pixel lines. So pixel line (i+j) can be compared with pixel line or (i+1) or any other of the i to (I+j-1) or even to a plurality of them. Preferably the comparison will however be performed with only one of them.

33 GN6 resp. 34 GN5: A sixth respectively a fifth control signal will be generated when from said comparison under step 32 it appears that pixel line (i+j) has a different respectively substantially a same pixel content as the one with which it was compared.

35 j=j+1: Under control of the fifth control signal the second counter is incremented by one value and the routine is repeated as from step 28. Indeed the generation of a fifth control signal was the consequence that line (i+j) had a substantially same pixel content as the one it was compared to. This signifies that pixel line i to i+j has a substantially same pixel content and that there is a probability that pixel line i+j+1 also has a substantially same pixel content. The steps 28, 30, 31, 32, 34 and 35 are thus repeated as long as the subsequent lines i to i+j have a substantially same pixel content. When however a line (i+j) has a different pixel content the sixth control signal will be generated which stops the increment of the second counter. The same will happen when the fourth control signal was generated.

36 RDj: The value j indicated by the second counter is read.

37 FM ID(j): An identifier word ID(j) is formed based on the value j indicated by the second counter. The value j indicates the number of pixel lines which have a substantially comparable pixel content. As for these pixel lines it is sufficient to store only a single one because they have substantially the same pixel content. Therefor the identifier word D(j) is generated and stored into the first memory.

38 GN ADD+FL: An address word for the i to i+j pixel lines is now generated. This address word also includes a flag indicating that the identifier word should be stored. That address word will then be used to generate a single address for the i to i+j pixel lines so that only a single pixel line will be stored instead of j pixel lines. The stored identifier will then indicate the number of lines which should be copied upon decompressing.

39 i=i+j: The first counter is now initialised to a value (i+j) in order to consider the subsequent pixel line.

40 GN4?: It is verified if the fourth control signal was generated indicating that the considered pixel line was the last one of the series of N pixel lines. If this is not the case the routine is restarted as from step 23 in order to continue the analysis of the video picture.

41 GN ADD: If line i and (i+1) did not have substantially a same pixel content then an address word is generated enabling to form an address for a location in the first memory at which the pixel line i will be stored.

42 i(i+1)=N? It is verified whether line (i+1) is the last to be considered.

43 GN ADDL: The address word enabling to form the address for storing the last line is generated.

44 i=i+1: The first counter is incremented by one unit in order to consider the subsequent pixel line.

45 STP: The routine for the considered picture is achieved.

The generation of the address words, the flag and the identifier is for example realised by means of the address word generator 14. The address itself is preferably generated by a counter which is incremented upon receipt of the horizontal synchronisation pulse (H) for each pixel line and reset upon receipt of the vertical synchronisation pulse (V). In such a manner the address word being then formed by an enabling signal provided for enabling the output of the generated address. In such a manner only when an address word is generated (step 38 or 41) the address is output and the considered pixel line can be stored. If no address word is generated, i.e. when the considered pixel line has a substantially same pixel content as the preceding one the address is not output and no storage can take place.

The supplied video pictures belong to a first series of M successive video pictures. The whole operation for determining an address word pattern described by means of figure 4 is preferably applied on a video picture preceding the one for which the series of addresses is generated, except of course when the first picture of the series is considered. In the latter case a standard predetermined address pattern could be applied. So for example if picture k (k≠1, k ε M) is supplied to the first memory 2 the address word pattern determined for picture k-1 is used to determine the memory address. Of course this causes a shift of one picture or even one frame if interlaced frames are used. This is however not a major problem as the difference between picture k and k-1 is negligible and even if both pictures were substantially different the human eye would practically not remark the shift as the succession of video pictures is too fast.

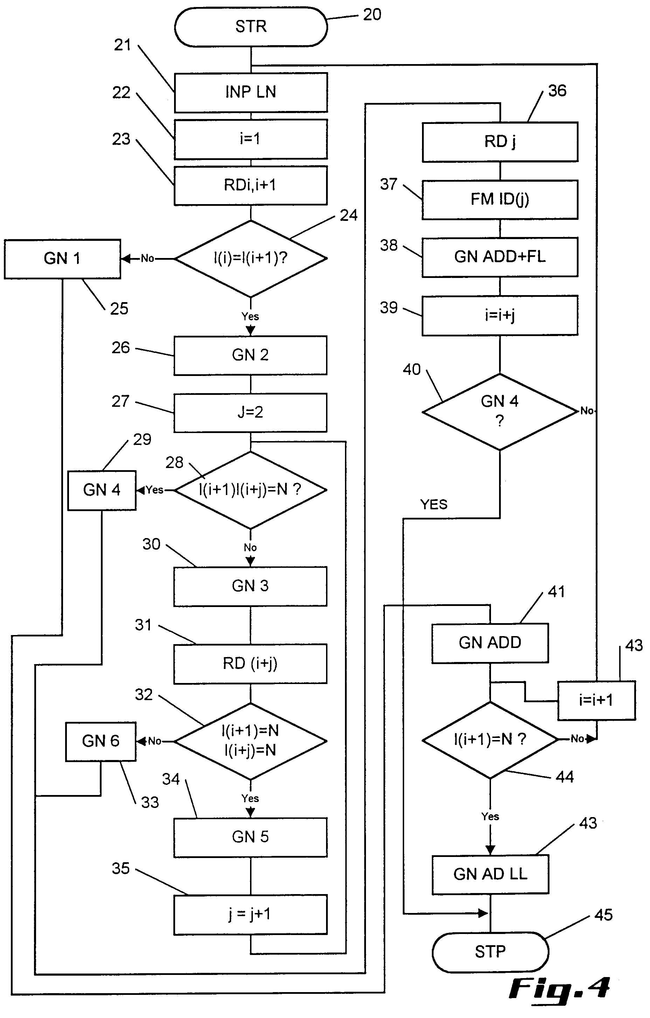

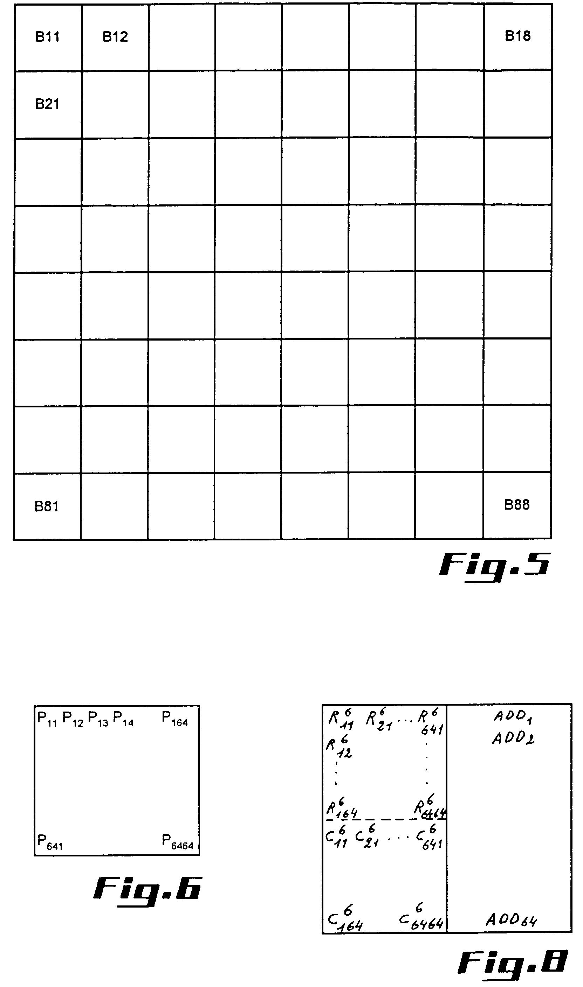

A practical set-up of a comparison element enabling a hardware realisation will now be described. The video pixels of a video picture output by the A/D converter 1 are supplied to the memory 17 via the data bus 16. Usually a video picture comprises 512x512 pixel lines and memory 17 is provided for storing such a video picture. For convenience purpose the video picture is divided in 8x8 blocks (B11, B12, ...B88) each block comprising 64x64 pixels such as illustrated in figure 5. It will be clear that another division such as 16x4 or 32x2 are also possible whereas 8x8 is preferred as this enables to consider a byte structure of the data to be processed. The 64x64 pixels of each of the 8x8 video blocks have a matrix build-up such as illustrated in figure 6. The pixels are indicated by $P_{rc}$ where r stands for the row and c for the column.

The video pixels are linewise supplied and written into memory 17. The addressing of the memory 17 is for example controlled by means of a pixel clock which receives the horizontal and vertical synchronisation pulses of the video picture. The memory 17 is connected to a series of counters which belong for example to the microprocessor 15 and which are provided for adding the pixel content of received pixels.

When the pixels $P_{11}$ to $P_{164}$ of block B11 have been stored the counters start their counting operation by adding each time two subsequent pixel values $R_{21}^{1} = P_{13} + P_{14},...R_{31}^{1} = P_{163} + P_{164}$. Once the values $R_{11}^{1}$ to $R_{31}^{1}$ are obtained a further addition of subsequent $R_d$ values is started, i.e. $R_{11}^{2} = R_{11}^{1} + {}_{21}^{1}, R_{21}^{2} = R_{31}^{1} + R_{41}^{1},...$

This operation is continued, such as illustrated in figure 8 until a value $R_{11}^{6} = R_{11}^{5} + R_{21}^{5}$ is obtained. Such a calculation enables to eliminate peak values which would be in one or two subsequent pixels and which adversely affect the compression without having a significant importance for the content of the picture.

A same summing operation is applied on the pixels of each of the 64 rows of block B11 as soon as all the pixels of the considered row or pixel lines are stored into memory 17. In such a manner a first set of horizontal line values $R_{11}^{6}$ to $R_{641}^{6}$ is obtained. Of course the same operation is repeated for all 8x8 blocks so that 64 series ($R_{11}^{6}$ to $R_{641}^{6}$, $R_{12}^{6}$ to $R_{642}^{6}$, ... $R_{164}^{6}$ to $R_{6464}^{6}$) of horizontal line values are obtained. Each of the $R_{gh}^{6}$ horizontal line values gives an indication of the similarity of the pixels within the considered pixel line part and thus in which manner they can be considered as a copy of each other. For he sake of clarity only the addition of the pixels is presented. However additional operations such as each time upon addition applying a division by 2 could also be applied.

The values $R_{gh}^{m}$ (2≤m≤6) are thus obtained by each time consequently adding the preceding values $R_{gh}^{m-1}$ pairwise and subsequently to each other.

The sum summing operation is also applied on the pixels of each column of the considered block so that a second set of vertical line values $C_{11}^{6}$ to $C_{641}^{6}$, ..., $C_{164}^{6}$ to $C_{6464}^{6}$ is obtained. The values $C_{gh}^{6}$ gives an indication on the similarity of the subsequent lines and thus also in which manner they can be deleted as they are nearly a copy of each other.

The thus obtained first and second set of horizontal respectively vertical values are used to address a table memory which is part of the memory 17 and which is schematically illustrated in figure 8. In the table address are stored a series of address words $ADD_1$ to $ADD_2$ which enables, as already explained to generate the address for FIFO memory 2. Those address words indicate which of the pixels and/or lines should not be stored as they are to be considered as having a substantially same content. The advantage of using the present table memory is that the content of the address words can be made dependent of the used video system. So that it will be sufficient to build up such a series of address words for a selected video system and thus make the link to the stored pixels set-up, whereas the analysis of the pixel content can be made in a same manner independent of the system.

The present method enables a compression factor Q situated between 30 and 250 in combination with a real time picture analysis. The summing operation can be performed nearly simultaneously with the writing of the pixels into memory 17, whereas it is not necessary to wait until for example block B12 is filled to start with line 1 of block B12. In such a manner the whole summing operation can be achieved before the vertical synchronisation pulse of the subsequent picture is input, as well as the whole addressing of the table memory. The set of address words to be used for the subsequent video picture will thus be available when the vertical synchronisation pulse is input and thus for the subsequent video picture.

Figure 3 illustrates the part of the device which enable the decompression of the video data compressed by application of the method described here before. The compressed video data is input into a decompression element 50 which decompresses the video data according to JPEG or MPEG in function of what was applied during the compression. The decompression element 50 thus forms the video data which pixel lines are then stored into a video memory 51 connected to said decompression element 50. As the compressed video data also compresses the identifier word ID(j) the latter is also decompressed and supplied via a data bus 54 to a video control unit 53 which is connected to an address generator 52.

The video control unit thus verifies if the decompressed data comprises an identifier word ID(j) and generates a seventh control signal upon detection of the presence of such an identifier word. Under control of that seventh control signal the value j is determined on the basis of said identifier. As was explained here before the identifier word comprises the value j indicating the number of successive pixel lines or pixel line parts which have a substantially same pixel content.

The value j is then supplied to the address generator 52 which will generate j+1 successive memory addresses at which the same pixel information will be stored. In such a manner that pixel line is copied at j+1 successive memory addresses enabling to rebuild the picture as only one of the j+1 pixel lines was stored during the compression operation. The fact that the same pixel line is written at j+1 successive addresses enables a real time writing into the memory 51.

The present method for compressing and decompressing is particularly suitable for security surveillance purposes where video pictures recorded by a camera have to be stored. In security surveillance it is important to store a lot of data whereas the successive picture often does not change much. Therefor the present invention offers a favourable solution as substantive reduction of data is obtained.

## Claims

1.  A method for compressing each time a video picture which belongs to a first series of video pictures, each of said video pictures being build up by a predetermined number of N pixel lines, said method comprising:

- supplying linewise said picture to a first memory;
- generating on the basis of a first series of address words a second series of a memory addresses for addressing locations within said first memory;
- successively addressing into said first memory the addresses of said first series;
- writing at said addresses at least a part of the supplied pixel line;
- retrieving said pixel line parts from said first memory and supplying them to a video compression unit;
- applying a predetermined compression operation to said retrieved pixel line parts and thereby forming compressed video data;
- storing said compressed video data into a second memory; characterised in that:
- said generating of said first series of address words comprises:

    (a) comparing the pixel content of said pixel line part of an $i^{th}$ ($i \; \varepsilon \; N$) pixel line with a same pixel line part of at least one subsequent pixel line;
    (b) generating a first respectively a second control signal if upon said comparing it is established that said $i^{th}$ and said at least one subsequent pixel line part have a different respectively a substantially same pixel content;
    (c) verifying if a last considered pixel line amongst said subsequent pixel lines is the last of the N pixel lines to be taken into account for the considered picture and generating a third respectively a fourth control signal if said last considered pixel line is not respectively is said last line;
    (d) under control of said second and third control signal;

        ($d_1$) starting a counter at a value j=m wherein m indicates the total number of pixel lines considered during the comparison;
        ($d_2$) selecting an $(i+j)^{th}$ pixel line;
        ($d_3$) further comparing the pixel content of said pixel line part of the $(i+j)^{th}$ pixel line with a same part of at least one of the pixel lines belonging to the i to (i+j-1) pixel lines;

    (e) generating a fifth respectively a sixth control signal if upon sold further comparing it is established that the compared pixel line parts have substantially a same respectively a different pixel content;
    (f) under control of said fifth control signal incrementing said counter by one unit ($i=j+1$) and executing again said step c for the $(i+j)^{th}$ pixel line;

(g) under control of said fifth and said third control signal executing again said steps $(d_2)$, $(d_3)$ and (e);

(h) under control of said sixth or said fifth followed by a fourth control signal:

(h$_1$) reading the value j indicated by said counter and forming an identifier word based on said value j;

(h$_2$) forming an $i^{th}$ address word including a flag;

(i) under control of a third followed by a sixth control signal substituting said value i by said i+j and repeating as from said step (a):

(j) under control of a first control signal forming an $i^{th}$ address word;

- said writing includes the writing of said identifier word when said $i^{th}$ address word includes said flag.

2. A method for decomprising video date which has been compressed by application of the method according to claim 1, characterised in that, said decompression comprises the following step:

- retrieving said compressed video data for a video picture from said second memory;
- decompressing said compressed video data and forming thereby pixel line parts for said video picture;
- verifying if said decompressed pixel line parts comprise said identifier word and generating a seventh control signal if said pixel line part comprises said identifier;
- generating for each decompressed video line part a memory address;
- under control of said seventh control signal determining said value j on the basis of said identifier and generating j+1 successive memory addresses for the pixel line part to which said identifier belongs;
- storing said decompressed pixel line parts at said addresses and storing at said j+1 successive memory address the pixel line part to which said identifier belongs.

3. A method as claimed in claim 1, characterised in that, said first series of video pictures comprises successive video pictures supplied by a video picture source, and wherein said generating of said first series of address words being each time applied on a video picture preceding the one for which said second series is generated.

4. A method as claimed in claim 1 or 3, characterised in that for said comparison between an $i^{th}$ pixel line part and an $(i + 1)^{th}$ or an $(l + j)^{th}$ a differential value of said $i^{th}$ and $(i+1)^{th}$ or $(i+j)^{th}$ pixel line part is determined.

5. A method as claimed in any one of the claims 1, 3 or 4, characterised in that said compression operation is a JPEG compression operation.

6. A method as claimed in any one of the claims 1, 3-5, characterised in that said second series of memory addresses comprises a generation of successive addresses for successive memory locations of said first memory, said address word being formed by an enabling signal provided for enabling the output of said address.

7. A method as claimed in claim 4, characterised in that said differential value is determined by adding each time two subsequent pixels of a same video line part to each other and by consequently adding the thus obtained sums pairwise and subsequently to each other in order to obtain a horizontal line value for said considered pixel line part.

8. A device for compressing each time a video picture comprising a video input provided for receiving a first series of video pictures, each of said video pictures being built up by a predetermined number of N pixel lines, said device further comprising a first memory for linewise storing said picture and an address generator provided for generating a second series of memory addresses on the basis of a first series of address words generated by an address word generator, said device also comprises a compression member an input of which being connected to an output of said first memory, said compression member being provided for applying a predetermined compression operation to said pixel lines of a picture stored in said first memory, characterised in that said address word generator is connected to a comparison member provided for comparing successive pixel line parts with each other and for assigning a single address word to those successive pixel line parts for which said comparison results into an establishment that those successive pixel line parts have substantially a same pixel content and for determining an identifier word identifying each time a number of successive pixel line parts having substantially a same pixel content, said first memory being provided for storing said identifier word.

9. A device as claimed in claim 8, characterised in that it comprises a decompression member provided for receiving said compressed video data, and obtain pixel line parts, said decompression member comprising a verification element provided for verifying if said decompressed video data comprises said identifier word, said verification element being further provided for generating a seventh control signal if said pixel line part comprises said identifier and for determining under control of said seventh control signal said value j on the basis of said identifier and generating j+1 successive memory addresses for the pixel line part to which said identifier belongs.

Fig.1

PIXEL CLOCK

11

12

| 13-1 | 13-2 | 13-3 | 13-4 |

H
V
B

15

16

17

2

14

H V B R

4

**Fig.2**

Fig.3

Fig.4

| B11 | B12 | | | | | | B18 |
|-----|-----|---|---|---|---|---|-----|
| B21 | | | | | | | |
| | | | | | | | |
| | | | | | | | |
| | | | | | | | |
| | | | | | | | |
| | | | | | | | |
| B81 | | | | | | | B88 |

**Fig.5**

$P_{11}$ $P_{12}$ $P_{13}$ $P_{14}$     $P_{164}$

$P_{641}$        $P_{6464}$

**Fig.6**

$R^6_{11}$ $R^6_{21}$ $\cdots$ $R^6_{641}$

$R^6_{12}$

$R^6_{164}$ $---$ $R^6_{6464}$

$C^6_{11}$ $C^6_{21}$ $\cdots$ $C^6_{641}$

$C^6_{164}$     $C^6_{6464}$

$ADD_1$

$ADD_2$

$ADD_{64}$

**Fig.8**

$$P_{11} + P_{12} \quad P_{13} + P_{14} \quad P_{15} + P_{16} \quad P_{17} + P_{18} \quad \cdots\cdots\cdots \quad P_{163} + P_{164}$$

$$\overset{\shortparallel}{R_1^1} \qquad \overset{\shortparallel}{R_2^1} \qquad \overset{\shortparallel}{R_3^1} \qquad \overset{\shortparallel}{R_4^1} \qquad\qquad \overset{\shortparallel}{R_{32}^1}$$

$$R_1^2 \qquad\qquad R_2^2$$

$$R_1^3$$

$$R_1^6 = R_1^5 + R_2^5$$

**Fig.7**

| | European Patent Office | EUROPEAN SEARCH REPORT | Application Number EP 96 20 3518 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 303 322 A (HOUTMAN FREDERIK KARANEMA ;HOUTMAN ZUIDEMA PETRA (NL)) 15 February 1989<br>* the whole document * | 1-9 | H04N7/26 |
| A | US 4 717 957 A (SANTAMAEKI HARRY ET AL) 5 January 1988<br>* the whole document * | 1-9 | |
| A | EP 0 588 653 A (FUJITSU LTD) 23 March 1994<br>* abstract; figures 7,8 * | 1-9 | |
| A | US 5 485 212 A (FREDERICK RONALD A) 16 January 1996<br>* abstract * | 1-9 | |
| A | EP 0 734 169 A (MATSUSHITA ELECTRIC IND CO LTD) 25 September 1996<br>* abstract * | 1-9 | |
| A | US 4 150 397 A (RUSSELL JAMES T) 17 April 1979 | | TECHNICAL FIELDS SEARCHED (Int.Cl.6) |
| A | US 3 895 184 A (KOMURA YASUYUKI ET AL) 15 July 1975 | | H04N |

The present search report has been drawn up for all claims

| Place of search | Date of completion of the search | Examiner |
|---|---|---|
| THE HAGUE | 21 May 1997 | Giannotti, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)